# EUROPÄISCHE PATENTANMELDUNG

(11) **EP 2 799 595 A1**
(43) Veröffentlichungstag der Anmeldung: **05.11.2014**
(21) Anmeldenummer: 13166454.2
(22) Anmeldetag: 03.05.2013
(51) Int. Cl.: C25D 5/12, B32B 15/01, B32B 15/20, C25D 5/50, C25D 7/00, C23C 18/16, H01R 4/20, H01R 13/03, C23C 14/16, C25D 3/12, C25D 3/38, C25D 3/50, C25D 3/56, C25D 3/58

(54) **Elektrisches Kontaktelement**

(71) Anmelder: Delphi Technologies, Inc., Troy, MI 48007 (US)
(72) Erfinder: Gärtner, Markus, 42117 Wuppertal (DE)
(74) Vertreter: Manitz, Finsterwald & Partner GbR

(57) **Zusammenfassung**

Die vorliegende Erfindung betrifft ein elektrisches Kontaktelement mit einem Anschlussabschnitt, welcher aus einem Kupferblech gebildet ist wenigstens zwei Schichten aufweist, wobei eine erste Schicht Zinn enthält und eine zweite Schicht, zwischen dem Substrat und der Zinnschicht, wenigstens ein Metall oder wenigstens eine Metalllegierung enthält, wobei das Metall oder die Metalllegierung aus der Gruppe bestehend aus kupferhaltigen Legierungen, Nickel, nickelhaltigen Legierungen, Palladium, palladiumhaltigen Legierungen und beliebigen Kombinationen der vorstehend genannten Metalle und Metalllegierungen ausgewählt ist.

Das Kontaktelement kann eine dritte Schicht aufweisen, die zinn enthält und zwischen dem Kupferblech und der zweiten Schicht angeordnet ist. Eine vierte Schicht, die Zink enthält, kann zwischen der ersten und der zweiten Schicht angeordnet werden.

## Beschreibung

Die vorliegende Erfindung betrifft ein elektrisches Kontaktelement, welches eine wenigstens zwei Schichten umfassende Beschichtung aufweist, die Zinn enthält, sowie ein Verfahren zur Herstellung eines solchen Kontaktelementes.

In Anbetracht der Belange des Klimaschutzes kommt der Verringerung des Ausstoßes von Treibhausgasen wie z.B. Kohlendioxid eine besondere Bedeutung zu. Daher ist die Automobilindustrie bestrebt, Fahrzeuge zu entwickeln, welche einen verhältnismäßig geringen Kraftstoffverbrauch aufweisen, um auf diese Weise die Kohlendioxidemissionen zu senken und einen Beitrag zum Klimaschutz zu leisten.

Ein Ansatz, den Kraftstoffverbrauch und somit den Kohlendioxidausstoß zu senken, beruht auf der Reduktion des Gewichts des Fahrzeugs. Um eine Gewichtseinsparung zu erreichen, wird verstärkt nach Möglichkeiten gesucht, Werkstoffe mit verhältnismäßig hohem Gewicht durch leichtere Materialien zu ersetzen, so dass die Fahrzeugkomponenten aus Leichtbaumaterialien gefertigt werden können.

Gemäß diesem Konzept bestehen Bestrebungen, auch das Gewicht der Verkabelung eines Fahrzeugs zu verringern, indem das typischerweise in Kabeln als Leitermaterial verwendete Kupfer durch leichtgewichtige Alternativen ersetzt wird. Ein mögliches, prinzipiell für den Ersatz der Kupferleitungen geeignetes Leitermaterial stellt Aluminium dar, das als Leichtmetall eine niedrige Dichte und somit ein geringes Eigengewicht aufweist.

Nachteilig ist jedoch, dass bei der Verwendung von Aluminium als Leitermaterial in Kombination mit elektrischen Kontaktelementen, welche typischerweise aus Kupfer gefertigt sind, an der Kontaktstelle zwischen Kupfer und Aluminium in Gegenwart eines Elektrolyten, wie z.B. Salzwasser, und Luftsauerstoff Korrosionsvorgänge auftreten. Diese Korrosionsvorgänge sind im Fall des direkten Kontaktes von Kupfer und Aluminium besonders ausgeprägt, da gemäß der elektrochemischen Spannungsreihe eine beträchtliche Differenz zwischen den Standardpotentialen (Normalpotentialen) von Aluminium und Kupfer und somit eine hohe Triebkraft für die Korrosionsreaktion vorliegt. Durch die galvanische Korrosion wird die Menge des Aluminiums als im Vergleich zu Kupfer unedlerem Metall verringert, was die elektrische Leitfähigkeit an den Kontaktstellen zwischen dem Leitermaterial und dem Kontaktelement signifikant herabsetzt, weshalb ein Bedarf an einem zuverlässigen Korrosionsschutz bei der Verwendung von aluminiumhaltigem Leitermaterial in Kombination mit einem aus Kupfer gefertigten elektrischen Kontaktelement besteht.

Der Erfindung liegt daher die Aufgabe zugrunde, ein elektrisches Kontaktelement bereitzustellen, welches in Kombination mit einem aluminiumhaltigen Leitermaterial verwendet werden kann und zuverlässigen Schutz vor Korrosion bietet.

Diese Aufgabe wird durch ein elektrisches Kontaktelement mit den Merkmalen des Patentanspruchs 1 gelöst.

Das erfindungsgemäße Kontaktelement umfasst einen Anschlussabschnitt, welcher aus einem Kupferblech gebildet ist und eine Beschichtung aufweist, welche eine erste Schicht umfasst, die Zinn enthält. Des Weiteren weist die Beschichtung eine zweite Schicht auf, welche zwischen der ersten Schicht und dem Kupferblech angeordnet ist. Die zweite Schicht enthält wenigstens ein Metall oder wenigstens eine Metalllegierung, wobei das Metall oder die Metalllegierung aus der Gruppe bestehend aus kupferhaltigen Legierungen, Nickel, nickelhaltigen Legierungen, Palladium, palladiumhaltigen Legierungen und beliebigen Kombinationen der vorstehend genannten Metalle und Metalllegierungen ausgewählt ist.

Der Erfindung liegt der allgemeine Gedanke zugrunde, dass durch eine Beschichtung des für ein Inkontaktbringen mit einem aluminiumhaltigen Leitermaterial vorgesehenen, aus Kupferblech gefertigten Anschlussabschnitts des Kontaktelementes das elektrochemische Potential des Anschlussabschnitts an das gemäß der elektrochemischen Spannungsreihe niedrigere Potential von Aluminium angenähert wird. Auf diese Weise wird die Differenz zwischen den Potentialen von Kupfer und Aluminium zumindest annähernd ausgeglichen und somit die Triebkraft der Korrosion derart reduziert, dass diese nicht mehr in einem kritischen Bereich liegt. Dieser Korrosionsschutz wird insbesondere dadurch erreicht, dass die Beschichtung mit Zinn ein in der elektrochemischen Spannungsreihe zwischen Kupfer und Aluminium stehendes Element enthält.

Eine Korrosionsschutzfunktion wird insbesondere durch die erste Schicht erreicht, welche Zinn enthält, das in der elektrochemischen Spannungsreihe zwischen Kupfer und Aluminium steht.

Die zweite Schicht erfüllt dagegen eine Barrierenfunktion. Aufgrund der Anordnung der zweiten Schicht zwischen der zinnhaltigen ersten Schicht und dem Kupferblech des Anschlussabschnitts wird der Austausch von Metallatomen durch Diffusion zwischen der zinnhaltigen ersten Schicht und dem Kupferblech unterbunden. Ohne diese Barrierenschicht bestünde die Gefahr, dass im Laufe der Fahrzeuglebensdauer eine Diffusion von Zinn aus der ersten Schicht in das Kupferblech stattfindet und sich Hohlräume bzw. Poren in der ersten Schicht ausbilden. Eine derartige Ausbildung von Hohlräumen und/oder Rissen würde das Eindringen eines Elektrolyten in das Schichtsystem begünstigen und eine unerwünschte Korrosion vorantreiben. Um dies zu vermeiden, ist die zweite Schicht zwischen der zinnhaltigen ersten Schicht und dem Kupferblech des Anschlusselementes angeordnet, welche wenigstens ein Metall oder wenigstens eine Metalllegierung ausgewählt aus der Gruppe bestehend aus kupferhaltigen Legierungen, Nickel, nickelhaltigen Legierungen, Palladium, palladiumhaltigen Legierungen und beliebigen Kombinationen der vorstehend genannten Metalle und Metalllegierungen enthält.

Alles in allem weist das erfindungsgemäße Kontaktelement einen hervorragenden Schutz vor Korrosion an der Kontaktstelle zwischen dem Kontaktelement und einem aluminiumhaltigen Leitermaterial bei gleichzeitig minimalem Kontaktwiderstand durch optimale elektrische Leitfähigkeit der Beschichtung auf, wodurch eine optimale Kontaktierung des Leitermaterials dauerhaft sichergestellt ist.

Das erfindungsgemäße Kontaktelement ist allgemein zur Kontaktierung von aluminiumhaltigen Leitungen geeignet. Besonders bevorzugt kann das Kontaktelement im Fahrzeugbau verwendet werden, da auf diese Weise anstelle kupferhaltiger Leitungen aluminiumhaltige Leitungen eingesetzt werden können, wodurch eine Verringerung des Fahrzeuggewichts und somit eine Treibstoffersparnis und verringerte Kohlendioxidemissionen erreicht werden können.

Vorteilhafte Ausbildungen der Erfindung sind den Unteransprüchen, der Beschreibung und der Zeichnung zu entnehmen.

Bei dem Anschlussabschnitt des elektrischen Kontaktelementes handelt es sich um einen Bereich, der für die Aufnahme des Leitermaterials einer elektrischen Leitung wie z.B. eines Kabels vorgesehen ist. Dabei kann die Verbindung mit dem Leitermaterial beispielsweise durch Crimpen erfolgen.

Zumindest der Anschlussabschnitt des elektrischen Kontaktelementes ist aus einem Kupferblech gebildet. Jedoch können auch weitere Abschnitte und insbesondere das komplette Kontaktelement aus einem Kupferblech gebildet sein. Beispielsweise kann es sich bei dem Kontaktelement um ein Stanz-/Biegeteil handeln.

Um als Korrosionsschutz wirken zu können, ist die Beschichtung in jedem Fall auf dem Anschlussabschnitt des elektrischen Kontaktelementes aufgebracht. Die Beschichtung kann jedoch auch in weiteren Bereichen des Kontaktelementes vorhanden sein, wobei es grundsätzlich denkbar ist, dass die Beschichtung die Oberfläche des Kontaktelementes vollständig überzieht. Es ist jedoch bevorzugt, dass die Beschichtung lediglich auf den Anschlussabschnitt des Kontaktelementes beschränkt ist und die übrigen Bereiche des Kontaktelementes, insbesondere ein zur Kontaktierung eines komplementären Kontaktelementes vorgesehener Bereich, z.B. ein Stecker- oder Buchsenabschnitt, keine Beschichtung aufweisen, um eine optimale elektrische Verbindung zwischen den Kontaktelementen zu gewährleisten.

Vorteilhafte Ausbildungen der Erfindung werden nachfolgend beschrieben. Gute Ergebnisse hinsichtlich der Barrierenfunktion werden erzielt, wenn die zweite Schicht bevorzugt eine Dicke von 0,1 bis 5 µm, weiter bevorzugt von 0,5 bis 5 µm, besonders bevorzugt von 0,5 bis 3 µm, noch weiter bevorzugt von 0,7 bis 2,5 µm und höchst bevorzugt von 0,8 bis 2,2 µm aufweist.

Des Weiteren kann die zweite Schicht eine kupferhaltige Legierung enthalten. Insbesondere kann die zweite Schicht aus einer kupferhaltigen Legierung bestehen.

Beispielsweise kann die kupferhaltige Legierung einen Gehalt von 35 bis 97 Gew.-% Kupfer, bevorzugt von 40 bis 90 Gew.-% Kupfer, besonders bevorzugt von 45 bis 80 Gew.-% Kupfer und höchst bevorzugt von 50 bis 65 Gew.-% Kupfer bezogen auf 100 Gew.-% der kupferhaltigen Legierung aufweisen, um gute Ergebnisse hinsichtlich der Barrierenfunktion zu erzielen.

Des Weiteren kann die kupferhaltige Legierung ein Metall enthalten, welches in der elektrochemischen Spannungsreihe zwischen Kupfer und Aluminium steht. Auf diese Weise leistet auch die zweite Schicht einen Beitrag zur Annäherung an das Potential von Aluminium und zur Reduktion der Potentialdifferenz zwischen dem Kupferblech des Kontaktelementes und dem aluminiumhaltigen Leitermaterial, um die Triebkraft für die Korrosionsreaktion zu verringern. Beispielsweise kann die kupferhaltige Legierung Zinn und/oder Zink enthalten. Somit kann als kupferhaltige Legierung beispielsweise eine Bronzelegierung oder eine Messinglegierung verwendet werden. Optional kann die Bronzelegierung des Weiteren einen Zinkzusatz aufweisen, während umgekehrt die Messinglegierung optional Zinn enthalten kann.

Um eine wirksame Diffusionsbarriere auszubilden und eine gute Korrosionsschutzwirkung zu erreichen, kann die zweite Schicht eine kupferhaltige Legierung, welche Zinn und Zink umfasst, enthalten oder aus einer solchen bestehen.

Bevorzugt enthält eine solche kupfer-, zinn- und zinkhaltige Legierung 35 bis 75 Gew.-% Kupfer, 15 bis 45 Gew.-% Zinn und 5 bis 50 Gew.-% Zink, besonders bevorzugt 40 bis 70 Gew.-% Kupfer, 20 bis 40 Gew.-% Zinn und 10 bis 30 Gew.-% Zink, noch weiter bevorzugt 45 bis 65 Gew.-% Kupfer, 25 bis 35 Gew.-% Zinn und 10 bis 30 Gew.-% Zink, höchst bevorzugt 48 bis 60 Gew.-% Kupfer, 27 bis 33 Gew.-% Zinn und 12 bis 20 Gew.-% Zink jeweils bezogen auf 100 Gew.-% der kupferhaltigen Legierung. Dabei beträgt die Summe aus Kupfer, Zinn und Zink bevorzugt wenigstens 90 Gew.-% bezogen auf 100 Gew.-% der kupferhaltigen Legierung. Den Rest auf 100 Gew.-% der kupferhaltigen Legierung können üblicherweise in kupferhaltigen Legierungen verwendete Legierungsbestandteile, bei denen es sich beispielsweise um Nickel, Palladium, Phosphor, Aluminium, Eisen, Cobalt, Mangan, Wolfram, Gold, Silber und/oder Blei handeln kann, und/oder unvermeidbare Verunreinigungen bilden.

Gemäß einer weiteren Ausführungsform kann die zweite Schicht eine kupfer-, zinn- und zinkhaltige Legierung enthalten oder aus einer solchen bestehen, welche bevorzugt 35 bis 75 Gew.-% Kupfer, 15 bis 45 Gew.-% Zinn und 5 bis 50 Gew.-% Zink, besonders bevorzugt 40 bis 70 Gew.-% Kupfer, 20 bis 40 Gew.-% Zinn und 10 bis 30 Gew.-% Zink, noch weiter bevorzugt 45 bis 65 Gew.-% Kupfer, 25 bis 35 Gew.-% Zinn und 10 bis 30 Gew.-% Zink, höchst bevorzugt 48 bis 60 Gew.-% Kupfer, 27 bis 33 Gew.-% Zinn und 12 bis 20 Gew.-% Zink jeweils bezogen auf 100 Gew.-% der kupferhaltigen Legierung enthält, wobei die Summe aus Kupfer, Zinn und Zink bevorzugt wenigstens 95 Gew.-% bezogen auf 100 Gew.-% der kupferhaltigen Legierung beträgt. Den Rest auf 100 Gew.-% der kupferhaltigen Legierung können üblicherweise in kupferhaltigen Legierungen verwendete Legierungsbestandteile, bei denen es sich beispielsweise um die im vorherigen Absatz aufgeführten Elemente handeln kann, und/oder unvermeidbare Verunreinigungen bilden.

Gemäß noch einer weiteren Ausführungsform kann die zweite Schicht eine kupfer-, zinn- und zinkhaltigen Legierung enthalten oder aus einer solchen bestehen, welche bevorzugt 35 bis 75 Gew.-% Kupfer, 15 bis 45 Gew.-% Zinn und 5 bis 50 Gew.-% Zink, besonders bevorzugt 40 bis 70 Gew.-% Kupfer, 20 bis 40 Gew.-% Zinn und 10 bis 30 Gew.-% Zink, noch weiter bevorzugt 45 bis 65 Gew.-% Kupfer, 25 bis 35 Gew.-% Zinn und 10 bis 30 Gew.-% Zink, höchst bevorzugt 48 bis 60 Gew.-% Kupfer, 27 bis 33 Gew.-% Zinn und 12 bis 20 Gew.-% Zink jeweils bezogen auf 100 Gew.-% der kupferhaltigen Legierung enthält, wobei die Summe aus Kupfer, Zinn und Zink bevorzugt wenigstens 98 Gew.-% bezogen auf 100 Gew.-% der kupferhaltigen Legierung beträgt. Den Rest auf 100 Gew.-% der kupferhaltigen Legierung können ebenfalls üblicherweise in kupferhaltigen Legierungen verwendete Legierungsbestandteile, insbesondere die in den beiden vorherigen Absätzen aufgeführten Elemente, und/oder unvermeidbare Verunreinigungen bilden.

Eine wirksame Diffusionsbarriere und ein guter Korrosionsschutz werden auch erreicht, wenn die zweite Schicht eine kupfer- und zinkhaltige Legierung enthält oder daraus besteht.

Bevorzugt enthält eine solche kupfer- und zinkhaltige Legierung 40 bis 80 Gew.-% Kupfer und 20 bis 60 Gew.-% Zink, besonders bevorzugt 50 bis 75 Gew.-% Kupfer und 25 bis 50 Gew.-% Zink, noch weiter bevorzugt 55 bis 70 Gew.-% Kupfer und 30 bis 45 Gew.-% Zink, höchst bevorzugt 57 bis 68 Gew.-% Kupfer und 32 bis 43 Gew.-% Zink jeweils bezogen auf 100 Gew.-% der kupferhaltigen Legierung. Dabei beträgt die Summe aus Kupfer und Zink bevorzugt wenigstens 90 Gew.-% bezogen auf 100 Gew.-% der kupferhaltigen Legierung. Den Rest auf 100 Gew.-% der kupferhaltigen Legierung können üblicherweise in kupferhaltigen Legierungen verwendete Legierungsbestandteile, bei denen es sich beispielsweise um Nickel, Palladium, Phosphor, Aluminium, Eisen, Cobalt, Mangan Wolfram, Gold, Silber, Zinn und/oder Blei handeln kann, und/oder unvermeidbare Verunreinigungen bilden.

Gemäß einer weiteren Ausführungsform kann die zweite Schicht eine kupfer- und zinkhaltige Legierung, bevorzugt mit 40 bis 80 Gew.-% Kupfer und 20 bis 60 Gew.-% Zink, besonders bevorzugt 50 bis 75 Gew.-% Kupfer und 25 bis 50 Gew.-% Zink, noch weiter bevorzugt 55 bis 70 Gew.-% Kupfer und 30 bis 45 Gew.-% Zink, höchst bevorzugt 57 bis 68 Gew.-% Kupfer und 32 bis 43 Gew.-% Zink jeweils bezogen auf 100 Gew.-% der kupferhaltigen Legierung enthalten oder aus einer solchen bestehen, wobei die Summe aus Kupfer und Zink wenigstens 95 Gew.-% bezogen auf 100 Gew.-% der kupferhaltigen Legierung beträgt. Den Rest auf 100 Gew.-% der kupferhaltigen Legierung können üblicherweise in kupferhaltigen Legierungen verwendete Legierungsbestandteile, bei denen es sich beispielsweise um die im voranstehenden Absatz aufgeführten Elemente handeln kann, und/oder unvermeidbare Verunreinigungen bilden.

Gemäß noch einer weiteren Ausführungsform kann die zweite Schicht eine kupfer- und zinkhaltige Legierung, bevorzugt mit 40 bis 80 Gew.-% Kupfer und 20 bis 60 Gew.-% Zink, besonders bevorzugt 50 bis 75 Gew.-% Kupfer und 25 bis 50 Gew.-% Zink, noch weiter bevorzugt 55 bis 70 Gew.-% Kupfer und 30 bis 45 Gew.-% Zink, höchst bevorzugt 57 bis 68 Gew.-% Kupfer und 32 bis 43 Gew.-% Zink jeweils bezogen auf 100 Gew.-% der kupferhaltigen Legierung enthalten oder aus einer solchen bestehen, wobei die Summe aus Kupfer und Zink bevorzugt wenigstens 98 Gew.-% bezogen auf 100 Gew.-% der kupferhaltigen Legierung beträgt. Den Rest auf 100 Gew.-% der kupferhaltigen Legierung können ebenfalls üblicherweise in kupferhaltigen Legierungen verwendete Legierungsbestandteile, insbesondere die in den beiden voranstehenden Absätzen aufgeführten Elemente, und/oder unvermeidbare Verunreinigungen bilden.

Gemäß einer alternativen Ausführungsform kann die zweite Schicht Nickel oder eine nickelhaltige Legierung enthalten und insbesondere bevorzugt aus Nickel oder einer nickelhaltigen Legierung bestehen. Wenn die zweite Schicht Nickel oder eine nickelhaltige Legierung enthält oder aus einer nickelhaltigen Legierung besteht, beträgt der Nickelgehalt bevorzugt wenigstens 80 Gew.-%, besonders bevorzugt wenigstens 90 Gew.-%, noch weiter bevorzugt wenigstens 95 Gew.-% und höchst bevorzugt wenigstens 98 Gew.-% bezogen auf 100 Gew.-% der nickelhaltigen Legierung. Den Rest auf 100 Gew.-% Nickel oder 100 Gew.-% der nickelhaltigen Legierung können üblicherweise in nickelhaltigen Legierungen verwendete Legierungsbestandteile bilden, bei denen es sich beispielsweise um Kupfer, Palladium, Platin, Aluminium, Cobalt, Mangan, Silicium, Chrom, Eisen, Zink, Molybdän, Wolfram, Magnesium und/oder Titan handeln kann.

Weiter alternativ kann die zweite Schicht Palladium oder eine palladiumhaltige Legierung enthalten und insbesondere daraus bestehen, wobei der Palladiumgehalt bevorzugt wenigstens 80 Gew.-% Palladium, besonders bevorzugt wenigstens 90 Gew.-% Palladium, noch weiter bevorzugt wenigstens 95 Gew.-% Palladium und höchst bevorzugt wenigstens 98 Gew.-% Palladium bezogen auf 100 Gew.-% der der palladiumhaltigen Legierung enthält. Den Rest auf 100 Gew.-% Palladium oder 100 Gew.-% der palladiumhaltigen Legierung können üblicherweise in palladiumhaltigen Legierungen verwendete Legierungsbestandteile, bei denen es sich beispielsweise um Kupfer, Nickel, Platin, Silber und/oder Gold handeln kann, und/oder unvermeidbare Verunreinigungen bilden.

Gemäß einer weiteren Ausführungsform handelt es sich bei der ersten Schicht der Beschichtung um eine Außenschicht, welche für einen unmittelbaren Kontakt mit dem Leitermaterial vorgesehen ist. Des Weiteren grenzt die erste Schicht bevorzugt unmittelbar an die zweite Schicht an, d.h. die erste Schicht liegt bevorzugt unmittelbar über der zweiten Schicht.

Gemäß noch einer weiteren Ausführungsform wird ein guter Korrosionsschutz insbesondere dann erreicht, wenn die erste Schicht wenigstens 60 Gew.-% Zinn bezogen auf 100 Gew.-% der ersten Schicht enthält. Bevorzugt enthält die erste Schicht wenigstens 70 Gew.-% Zinn, besonders bevorzugt wenigstens 80 Gew.-% Zinn und ganz besonders bevorzugt wenigstens 90 Gew.-% Zinn bezogen auf 100 Gew.-% der ersten Schicht. Insbesondere kann es sich bei der ersten Schicht auch um eine hochreine Zinnschicht handeln, welche beispielsweise wenigstens 95 Gew.-% Zinn oder wenigstens 98 Gew.-% Zinn enthält.

Zusätzlich kann die erste Schicht Zink enthalten, um durch das Beimischen von Zink, das gemäß der elektrochemischen Spannungsreihe ein niedrigeres Standardpotential als Zinn, aber ein höheres Standardpotential als Aluminium aufweist, das Potential der ersten Schicht weiter an das Potential des aluminiumhaltigen Leitermaterials anzunähern und somit die Potentialdifferenz als Triebkraft für die Korrosion zu verringern. Beispielsweise kann die erste Schicht 0 bis 40 Gew.-% Zink, bevorzugt 2 bis 30 Gew.-% Zink, besonders bevorzugt 5 bis 25 Gew.-% Zink und ganz besonders bevorzugt 10 bis 20 Gew.-% Zink bezogen auf 100 Gew.-% der ersten Schicht enthalten. Wenn die erste Schicht sowohl Zinn als auch Zink enthält, beträgt die Summe aus Zinn und Zink bevorzugt 90 Gew.-%, besonders bevorzugt 95 Gew.-%, höchst bevorzugt 98 Gew.-% bezogen auf 100 Gew.-% der zweiten Schicht. Den Rest auf 100 Gew.-% der zweiten Schicht können übliche Bestandteile, welche in Zinn- und/oder Zinklegierungen verwendet werden, und/oder unvermeidbare Verunreinigungen bilden.

Um einen wirksamen Korrosionsschutz auch über eine z.B. in Automobilanwendungen üblicherweise zu erwartende Lebensdauer zu erreichen, weist die erste Schicht bevorzugt eine Dicke von 1 bis 15 µm, besonders bevorzugt von 2 bis 10 µm, noch weiter bevorzugt von 3 bis 7 µm, höchst bevorzugt von 4 bis 6 µm auf, und zwar insbesondere, wenn die zweite Schicht eine Dicke von 0,1 bis 5 µm, bevorzugt von 0,5 bis 5 µm, weiter bevorzugt von 0,5 bis 3 µm, besonders bevorzugt von 0,7 bis 2,5 µm, höchst bevorzugt von 0,8 bis 2,2 µm aufweist.

Gemäß noch einer weiteren Ausführungsform kann die Beschichtung ferner eine dritte Schicht umfassen, welche zwischen der zweiten Schicht und dem Kupferblech angeordnet ist und Zinn enthält. Eine derartige dritte Schicht liegt beispielsweise dann vor, wenn für die Herstellung des elektrischen Kontaktelementes als Ausgangsmaterial ein Kupferblech verwendet wird, welches mit einer durch Feuerverzinnen aufgebrachten Zinnschicht versehen ist. Liegt eine dritte Schicht vor, beispielsweise im Fall eines feuerverzinnten Kupferblechs, wird diese als Teil der Beschichtung und nicht als Teil des Kupferblechs angesehen.

Im Fall des Vorliegens einer dritten Schicht enthält diese bevorzugt wenigstens 80 Gew.-% Zinn, besonders bevorzugt wenigstens 90 Gew.-% Zinn, weiter bevorzugt wenigstens 95 Gew.-% Zinn und ganz besonders bevorzugt wenigstens 98 Gew.-% Zinn bezogen auf 100 Gew.-% der dritten Schicht. Höchst bevorzugt besteht die dritte Schicht aus Zinn.

Die Dicke der dritten Schicht kann im Bereich von 0,01 bis 5 µm, bevorzugt von 0,5 bis 3,5 µm und besonders bevorzugt von 1 bis 2 µm liegen.

Gemäß einer weiteren bevorzugten Ausführungsform grenzt die dritte Schicht unmittelbar an die zweite Schicht und/oder an das Kupferblech des Kontaktelementes an. Ist keine dritte Schicht vorgesehen, kann die zweite Schicht unmittelbar auf das Kupferblech des Kontaktelementes aufgebracht sein und an dieses angrenzen.

Ferner kann die Beschichtung eine vierte Schicht umfassen, welche auf einer der zweiten Schicht und dem Kupferblech abgewandten Seite der ersten Schicht angeordnet ist und Zink enthält. Eine derartige vierte Schicht kann als Außenschicht ausgebildet sein. Zusätzlich kann die vierte Schicht unmittelbar an die erste Schicht angrenzen. Ein solcher Aufbau der Beschichtung, bei dem neben einer ursprünglichen ersten Schicht und einer zweiten Schicht auch noch eine vierte Schicht, welche als Außenschicht ausgebildet ist und unmittelbar an die erste Schicht angrenzt, vorgesehen ist, kann bereits für sich genommen als Korrosionsschutz dienen. Bevorzugt wird ein solcher Schichtaufbau aber als Zwischenprodukt für die Herstellung einer Beschichtung verwendet, bei der durch eine zumindest teilweise Vermischung der ursprünglichen ersten Schicht und der vierten Schicht, beispielsweise mittels Wärmebehandlung, eine modifizierte erste Schicht gebildet wird, welche sowohl Zinn als auch Zink enthält. Insbesondere kann sich bei einer derartigen Vermischung eine zinn - und zinkhaltige Legierung ausbilden.

Falls neben der ersten und zweiten Schicht eine vierte Schicht vorgesehen ist, enthält diese bevorzugt wenigstens 80 Gew.-% Zink, besonders bevorzugt wenigstens 90 Gew.-% Zink, noch weiter bevorzugt wenigstens 95 Gew.-% Zink und höchst bevorzugt wenigstens 98 Gew.-% Zink bezogen auf 100 Gew.-% der vierten Schicht. Alternativ dazu kann die vierte Schicht auch aus Zink bestehen.

Die Dicke der vierten Schicht kann von 0,1 bis 3 µm, bevorzugt von 0,2 bis 2 µm, besonders bevorzugt von 0,5 bis 1,5 µm und höchst bevorzugt von 0,7 bis 1,3 µm betragen. Durch die Auswahl der Dicken und der Gehalte an Zinn und Zink der vor der Wärmebehandlung aufgebrachten ursprünglichen ersten Schicht und der vierten Schicht können der Zinngehalt und der Zinkgehalt in der modifizierten ersten Schicht, die durch zumindest teilweises Vermischen der ursprünglichen ersten Schicht und der vierten Schicht mittels Wärmebehandlung gebildet wird, eingestellt werden.

Die vorstehend beschriebenen Schichten der Beschichtung können gemäß einer Ausführungsform unmittelbar aneinander angrenzen. Es ist jedoch auch möglich, dass zwischen den Schichten jeweils Bereiche vorliegen, welche eine oder mehrere intermetallische Phasen aufweisen. Derartige intermetallische Phasenbereiche können Metalle aus den jeweiligen an diese Bereiche angrenzenden Schichten enthalten und z.B. durch Diffusionsprozesse beim Lagern der Beschichtung über einen längeren Zeitraum entstehen oder gezielt durch eine Wärmebehandlung ausgebildet werden. Beispielsweise können intermetallische Phasenbereiche zwischen der ersten Schicht sowie der zweiten Schicht und/oder zwischen der zweiten Schicht sowie der dritten Schicht und/oder zwischen der dritten Schicht sowie dem Kupferblech und/oder zwischen der ersten Schicht sowie der vierten Schicht vorliegen. Ohne an eine Theorie gebunden sein zu wollen wird angenommen, dass derartige intermetallische Phasenbereiche die Barrierenfunktion verstärken, um auf diese Weise Diffusionsprozesse zwischen den Schichten zu unterbinden und somit die Lebensdauer der Beschichtung zu erhöhen. Die Dicke dieser intermetallischen Phasenbereiche kann jeweils von 0,01 bis 3 µm, bevorzugt von 0,1 bis 2 µm, besonders bevorzugt von 0,25 bis 1,5 µm und höchst bevorzugt von 0,5 bis 1 µm betragen.

Die Gesamtdicke der Beschichtung kann, insbesondere unabhängig von den zuvor beschriebenen Dicken der individuellen Schichten, 1 bis 25 µm, bevorzugt 2 bis 20 µm, besonders bevorzugt 3 bis 15 µm und höchst bevorzugt 4 bis 10 µm betragen. Dabei zählt die Dicke eines möglicherweise vorhandenen intermetallischen Phasenbereichs, welcher unmittelbar an das Kupferblech angrenzt, mit zur Gesamtdicke der Beschichtung.

Gegenstand der vorliegenden Erfindung ist des Weiteren ein Verfahren zur Herstellung eines elektrischen Kontaktelementes, insbesondere zur Herstellung eines elektrischen Kontaktelementes nach einer der vorstehend beschriebenen Arten, welches die Schritte umfasst:
- Bereitstellen eines Grundkörpers aus, optional feuerverzinntem, Kupferblech,
- Aufbringen einer zweiten Schicht auf den Grundkörper, wobei die zweite Schicht wenigstens ein Metall oder wenigstens eine Metalllegierung enthält, wobei das Metall oder die Metalllegierung aus der Gruppe bestehend aus einer kupferhaltigen Legierung, Nickel, Palladium und beliebigen Kombinationen der vorstehend genannten Metalle und Metalllegierungen ausgewählt wird, und
- Aufbringen einer ersten Schicht, welche Zinn enthält, auf einer dem Grundkörper abgewandten Seite der zweiten Schicht.

Die Form des Grundkörpers, auf den die Schichten aufgebracht werden, ist nicht besonders beschränkt. Beispielsweise kann der Grundkörper bereits die endgültige Form des Kontaktelementes aufweisen. Alternativ kann der Grundkörper erst nach seiner Beschichtung durch Umformungsschritte wie beispielsweise Ausstanzen und/oder Umbiegen in die endgültige Form des Kontaktelementes gebracht werden.

Um die elektrische Leitfähigkeit bei der Kontaktierung des elektrischen Kontaktelementes wie bereits vorstehend beschrieben nicht zu beeinträchtigen, wird die Beschichtung bevorzugt lediglich auf einen als Anschlussabschnitt vorgesehenen Bereich des Grundkörpers aufgebracht. Es ist jedoch auch denkbar, weitere Bereiche des Grundkörpers, insbesondere den kompletten Grundkörper, mit der Beschichtung zu versehen.

Vorteilhafte Ausbildungen des Verfahrens zur Herstellung eines Kontaktelementes werden nachfolgend beschrieben.

Zusätzlich zu der ersten und zweiten Schicht können bzw. kann optional auch eine wie oben beschriebene dritte und/oder vierte Schicht aufgebracht werden. Bevorzugt werden die erste, die zweite, optional die dritte und/oder vierte Schicht so aufgebracht, dass sich die oben beschriebene relative Anordnung der Schichten zueinander ergibt. Dabei grenzen die Schichten der Beschichtung bevorzugt unmittelbar aneinander, und die dritte Schicht grenzt bevorzugt unmittelbar an das Kupferblech des Anschlussabschnitts.

Die erste Schicht und die zweite Schicht weisen bevorzugt die voranstehend beschriebenen Zusammensetzungen auf, insbesondere in Hinblick auf die jeweiligen in der ersten und der zweiten Schicht verwendeten Metalle bzw. Metalllegierungen und deren Gehalte. Auch die optionale dritte und/oder vierte Schicht weisen bevorzugt die oben beschriebenen Zusammensetzungen auf, insbesondere bezüglich der jeweiligen Metalle und deren Gehalte. Ebenfalls bevorzugt weisen die erste, die zweite, die optionale dritte und/oder vierte Schicht Schichtdicken gemäß den für die jeweilige Schicht vorstehend beschriebenen Bereichen auf. Auch liegt die Gesamtdicke der erhaltenen Beschichtung bevorzugt in den vorstehend beschriebenen Bereichen.

Das Verfahren zum Aufbringen der Schichten ist nicht besonders beschränkt. Beispielsweise kann wenigstens eine Schicht durch ein Verfahren ausgewählt aus der Gruppe bestehend aus Galvanotechnik, Bedampfen, Sputtern, Tauchbeschichten, Sprühbeschichten und beliebigen Kombinationen der vorstehend genannten Verfahren aufgebracht werden.

Gute Ergebnisse hinsichtlich des Korrosionsschutzes und der Lebensdauer der Beschichtung lassen sich zum Beispiel erhalten, wenn die erste, die zweite und die optionale vierte Schicht durch Galvanotechnik bzw. Elektroplattieren, d.h. durch die elektrolytische Abscheidung einer Metallschicht aus einer wässrigen Metallsalzlösung, aufgebracht werden. Das galvanotechnische Verfahren kann dabei weitere, in der Galvanotechnik übliche Verfahrensschritte wie beispielsweise das Entfetten, Spülen und/oder die Entfernung von Oberflächenoxiden umfassen.

Die dritte Schicht wird, sofern diese vorgesehen ist, bevorzugt mittels Tauchbeschichten aufgebracht. Dazu kann der Grundkörper beispielsweise durch Eintauchen in ein Bad von geschmolzenem Zinn feuerverzinnt werden. Wie oben beschrieben, kann die dritte Schicht bereits dadurch vorliegen, dass ein kommerziell erhältlicher Grundkörper aus feuerverzinntem Kupferblech verwendet wird. Alternativ kann auf die dritte Schicht auch verzichtet werden und die zweite Schicht unmittelbar auf das Kupferblech des Grundkörpers aufgebracht werden.

Gemäß einer Weiterbildung des Verfahrens kann nach dem Aufbringen der Schichten auf den Grundköper eine Wärmebehandlung durchgeführt werden, um die Bildung der oben beschriebenen intermetallischen Phasenbereiche zwischen den Schichten zu begünstigen. Ebenfalls kann durch die Wärmebehandlung wie bereits oben beschrieben eine Vermischung zwischen der ersten und vierten Schicht zu einer modifizierten ersten Schicht erfolgen. Bei einer derartigen Vermischung der ersten und vierten Schicht mittels Wärmebehandlung kann insbesondere eine zinn - und zinkhaltige Legierung gebildet werden.

Die Wärmebehandlung kann in einem Temperaturbereich von 50 bis 350°C, bevorzugt von 80 bis 300°C, besonders bevorzugt von 200 bis 280°C, höchst bevorzugt von 220 bis 270°C und allerhöchst bevorzugt von 230 bis 250°C durchgeführt werden. Dabei wird die Temperatur nach dem Aufheizen bevorzugt über einen Zeitraum von 1 Sekunde bis 48 Stunden, besonders bevorzugt von 3 Sekunden bis 12 Stunden, noch weiter bevorzugt von 5 Sekunden bis 5 Minuten und höchst bevorzugt von 5 Sekunden bis 2 Minuten gehalten. Besonders bevorzugt wird die Wärmebehandlung bei einer Temperatur im Bereich von 200 bis 280 °C durchgeführt, welche für einen Zeitraum von 5 Sekunden bis 5 Minuten gehalten wird. Höchst bevorzugt wird die Wärmebehandlung bei einer Temperatur im Bereich von 220 bis 270 °C durchgeführt, welche für einen Zeitraum von 5 Sekunden bis 2 Minuten gehalten wird.

Falls die Herstellung des elektrischen Kontaktelementes gemäß einem der vorstehend beschriebenen Verfahren eine Umformung des Grundkörpers erfordert, ist die Abfolge der Umformungsschritte und der Schritte zum Aufbringen der Beschichtung nicht besonders festgelegt. Beispielsweise kann das Verfahren die Schritte umfassen, dass der Grundkörper aus einem Kupferband ausgestanzt und zu einem Kontaktelement umgebogen wird, wobei zumindest eine Schicht der Beschichtung zwischen dem Ausstanzen und dem Umbiegen oder nach dem Umbiegen aufgebracht wird. Ebenso ist es möglich, die Wärmebehandlung nach dem Aufbringen der Schichten vor oder nach dem Umbiegen durchzuführen.

Gegenstand der vorliegenden Erfindung ist außerdem ein elektrisches Kontaktelement, das nach einem der vorstehend beschriebenen Verfahren erhältlich ist.

Nachfolgend wird die Erfindung anhand möglicher Ausführungsformen rein beispielhaft unter Bezugnahme auf die Zeichnung beschrieben. Es zeigen:
- Fig. 1: eine perspektivische Ansicht einer Ausführungsform eines erfindungsgemäßen elektrischen Kontaktelementes vor dem Anschluss einer elektrischen Leitung,
- Fig. 2: eine perspektivische Ansicht des in Fig. 1 dargestellten Kontaktelementes mit einer daran angeschlossenen elektrischen Leitung,
- Fig. 3: schematisch einen Anschlussabschnitt eines elektrischen Kontaktelementes mit einer Beschichtung gemäß einer ersten Ausführungsform,
- Fig. 4: schematisch einen Anschlussabschnitt eines elektrischen Kontaktelementes mit einer Beschichtung gemäß der ersten Ausführungsform nach einer Wärmebehandlung,
- Fig. 5: schematisch einen Anschlussabschnitt eines elektrischen Kontaktelementes mit einer Beschichtung gemäß einer zweiten Ausführungsform,
- Fig. 6: schematisch einen Anschlussabschnitt eines elektrischen Kontaktelementes mit einer Beschichtung gemäß der zweiten Ausführungsform nach einer Wärmebehandlung,
- Fig. 7: schematisch einen Anschlussabschnitt eines elektrischen Kontaktelementes mit einer Beschichtung gemäß einer dritten Ausführungsform und
- Fig. 8: schematisch einen Anschlussabschnitt eines elektrischen Kontaktelementes mit einer Beschichtung gemäß der dritten Ausführungsform nach einer Wärmebehandlung.

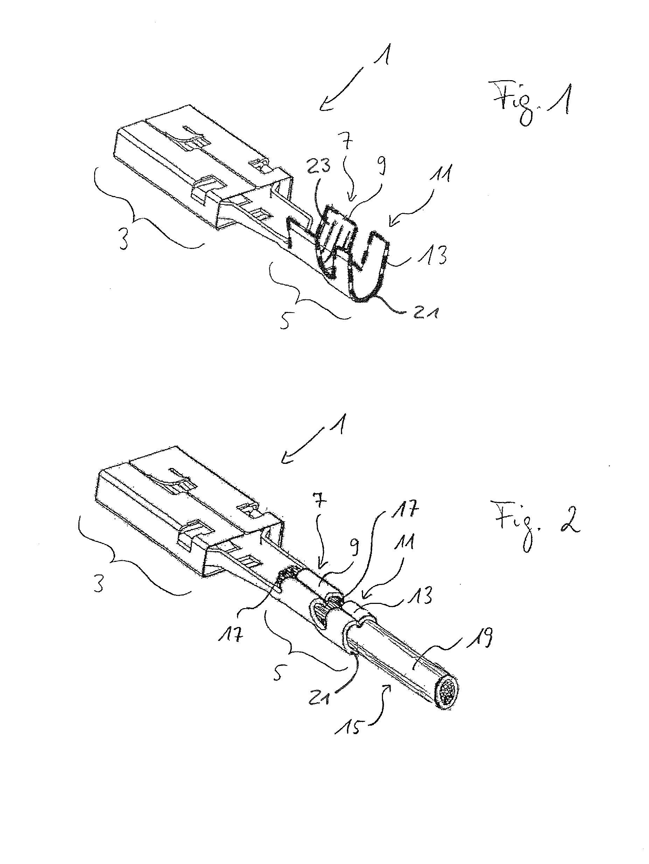

Fig. 1 und 2 zeigen ein elektrisches Kontaktelement 1, welches einen Kontaktabschnitt 3 zur Kontaktierung eines komplementären Kontaktelementes und einen Anschlussabschnitt 5 zum Anschließen einer elektrischen Leitung 15 aufweist. Der Anschlussabschnitt 5 ist seinerseits in einen Crimpabschnitt 7 mit Crimpflügeln 9 und einen Halteabschnitt 11 mit Halteflügeln 13 unterteilt, welche zum Befestigen der elektrischen Leitung 15 vorgesehen sind. Hierzu werden die Crimpflügel 9 des Crimpabschnitts 7 an abisoliertes Leitermaterial 17 der elektrischen Leitung 15 gecrimpt, während die Halteflügel 13 des Halteabschnitts 11 an die Isolation 19 der elektrischen Leitung 15 gecrimpt werden (Fig. 2).

Der Anschlussabschnitt 5 ist aus einem Kupferblech 21 gebildet und mit einer Beschichtung 23 versehen.

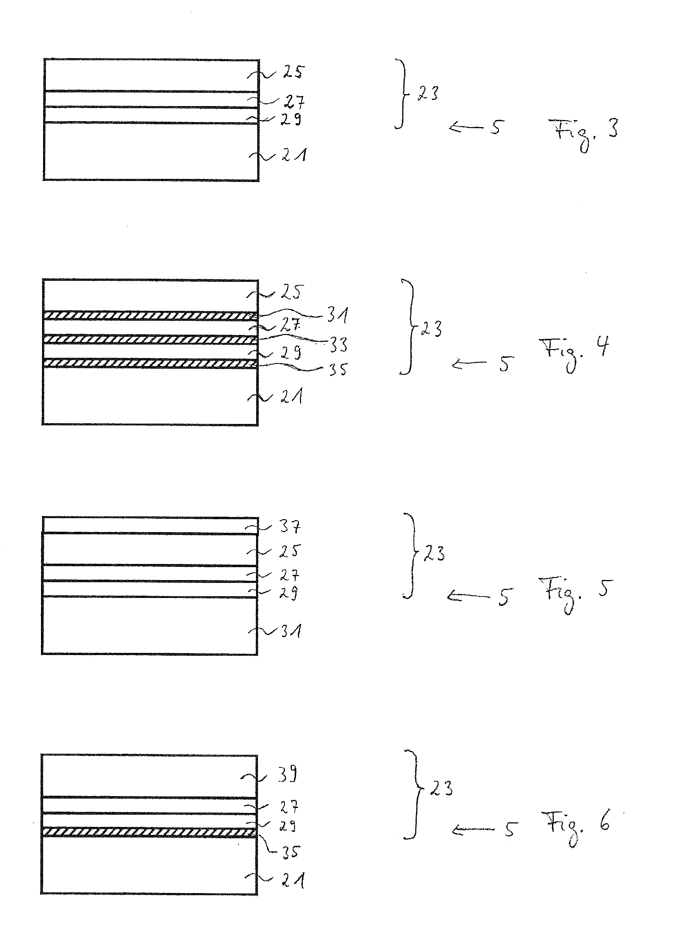

Gemäß einer in Fig. 3 schematisch gezeigten ersten Ausführungsform weist die Beschichtung 23 eine durch Feuerverzinnen auf eine Oberfläche des Kupferblechs 21 aufgebrachte dritte Schicht 29 aus Zinn auf. Auf der dem Kupferblech 21 abgewandten Oberfläche der dritten Schicht ist eine galvanisch aufgebrachte zweite Schicht 27 aus einer Bronzelegierung angeordnet, welche Kupfer, Zinn und Zink enthält. Alternativ kann die zweite Schicht 27 auch aus einer Messinglegierung gebildet sein, welche Kupfer und Zink enthält. Des Weiteren ist auf der dem Kupferblech 21 abgewandten Oberfläche der zweiten Schicht 27 eine erste Schicht 25 aus Zinn galvanisch aufgebracht, welche eine Außenschicht bildet, die für die Kontaktierung des Leitermaterials 17 (Fig. 2) vorgesehen ist.

Wie Fig. 4 zeigt, können zwischen den Schichten 25, 27 und 29 zusätzlich Bereiche 31, 33 und 35 von intermetallischen Phasen vorliegen, die sich im Laufe der Zeit selbst ausbilden oder durch eine Wärmebehandlung gezielt erzeugt werden können. Dabei ist ein erster intermetallischer Phasenbereich 31 zwischen der ersten Schicht 25 und der zweiten Schicht 27, ein zweiter intermetallischer Phasenbereich 33 zwischen der zweiten Schicht 27 und der dritten Schicht 29 sowie ein dritter intermetallischer Phasenbereich 35 zwischen der dritten Schicht 29 und dem Kupferblech 21 angeordnet.

Fig. 5 zeigt eine zweite Ausführungsform der Beschichtung 23, welche vier Schichten aufweist. Zunächst ist unmittelbar auf der Oberfläche des Kupferblechs 21 eine durch Feuerverzinnen aufgebrachte dritte Schicht 29 aus Zinn angeordnet, auf deren dem Kupferblech 21 abgewandter Oberfläche unmittelbar eine galvanisch aufgebrachte zweite Schicht 27 aus Nickel folgt. Auf der dem Kupferblech 21 abgewandten Oberfläche der zweiten Schicht 27 ist eine galvanisch aufgebrachte erste Schicht 25 vorgesehen. Ferner liegt eine auf die dem Kupferblech 21 abgewandte Oberfläche der ersten Schicht 25 galvanisch aufgebrachte vierte Schicht 37 aus Zink vor, welche eine Außenschicht bildet.

Fig. 6 zeigt den Zustand dieser zweiten Ausführungsform nach einer Wärmebehandlung. Durch die Wärmebehandlung haben sich die ursprünglich vorhandene erste Schicht 25 aus Zinn und die vierte Schicht 37 aus Zink zu einer modifizierten ersten Schicht 39 vermischt, welche sowohl Zinn als auch Zink enthält. Nach wie vor sind die zweite Schicht 27 aus Nickel und die dritte Schicht 29 aus Zinn vorhanden. Ferner liegt nach der Wärmebehandlung ein intermetallischer Phasenbereich 35 zwischen der dritten Schicht 29 und dem Kupferblech 21 vor.

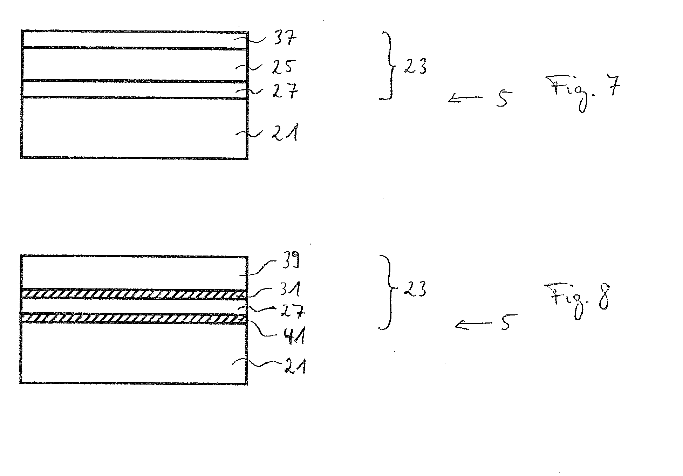

In Fig. 7 ist eine Beschichtung 23 gemäß einer dritten Ausführungsform dargestellt, welche keine durch Feuerverzinnen aufgebrachte dritte Schicht 29 aus Zinn aufweist. Vielmehr ist unmittelbar auf der Oberfläche des Kupferblechs 21 eine galvanisch aufgebrachte zweite Schicht 27 aus einer Bronzelegierung vorgesehen, welche Kupfer, Zinn und Zink enthält. Auf der dem Kupferblech 21 abgewandten Oberfläche der zweiten Schicht 27 folgt eine ebenfalls galvanisch aufgebrachte erste Schicht 25 aus Zinn. Ferner liegt auf der dem Kupferblech 21 abgewandten Oberfläche der ersten Schicht 25 eine galvanisch aufgebrachte vierte Schicht 37 aus Zink vor, welche eine Außenschicht bildet.

Fig. 8 zeigt den Zustand dieser dritten Ausführungsform nach einer Wärmebehandlung. Aufgrund der Wärmebehandlung haben sich die ursprüngliche erste Schicht 25 und die ursprüngliche vierte Schicht 37 zu einer modifizierten ersten Schicht 39 vermischt, welche Zinn und Zink enthält. Vorhanden sind des Weiteren die zweite Schicht 27 aus der Bronzelegierung, ein intermetallischer Phasenbereich 31 zwischen der modifizierten ersten Schicht 39 und der zweiten Schicht 27 sowie ein weiterer intermetallischer Phasenbereich 41 zwischen der zweiten Schicht 27 und dem Kupferblech 21.

Nachfolgend wird die Herstellung der vorstehend aufgeführten Ausführungsformen des Kontaktelementes 1 beschrieben:

### Erste Ausführungsform (Fig. 3)

Ein Kupferband, das aus Kupferblech 21 ausgestanzte Vorformlinge mit einer Feuerverzinnung (dritte Schicht 29) aufweist, welche durch Umbiegen in die Form des elektrischen Kontaktelementes 1 gebracht werden können, wird vor dem Galvanisieren zunächst einer Vorbehandlung unterzogen. Dazu werden diejenigen Bereiche des Vorformlings, die den Anschlussabschnitt 5 bilden, nacheinander heißentfettet, gespült, elektrolytisch entfettet, gespült, von Oberflächenoxiden befreit und nochmals gespült. Anschließend wird durch Elektroplattieren eine Bronzelegierung als zweite Schicht 27 auf den derart vorbehandelten Anschlussabschnitt 5 des feuerverzinnten Vorformlings galvanisch aufgebracht, wobei das Elektroplattieren für 4 Minuten bei 60°C und einer Stromdichte von 1 A/dm² in einem wässrigen Bad durchgeführt wird, welches eine Kupferionenkonzentation von 14 g/L, eine Zinnionenkonzentration von 20 g/L und eine Zinkionenkonzentration von 4 g/L aufweist (z.B. mittels BRONZEX^{®} WJ-SP der Firma Enthone). Auf diese Weise wird eine zweite Schicht 27 aus einer Bronzelegierung mit einer Zusammensetzung von 50 bis 55 Gew.-% Kupfer, 28 bis 32 Gew.-% Zinn und 15 bis 19 Gew.-% Zink erhalten, welche eine Dicke von 1 µm aufweist.

Alternativ kann anstelle der zweiten Schicht 27 aus der Bronzelegierung durch Elektroplattieren eine zweite Schicht 27 aus einer Messinglegierung auf den vorbehandelten Anschlussabschnitt 5 des feuerverzinnten Vorformlings galvanisch aufgebracht werden, wobei das Elektroplattieren für 8 Minuten bei 50°C und einer Stromdichte von 0,5 A/dm² in einem wässrigen Bad durchgeführt wird, welches eine Kupferionenkonzentation von 18 g/L und eine Zinkionenkonzentration von 21 g/L aufweist (z.B. mittels TRIUMPF 10 der Firma Enthone). Auf diese Weise wird eine zweite Schicht 27 aus einer Messinglegierung erhalten, welche eine Dicke von 1 µm aufweist.

Anschließend werden die die zweite Schicht 27 aufweisenden Bereiche des Vorformlings gespült, von Oberflächenoxiden befreit und erneut gespült, bevor durch Elektroplattieren eine erste Schicht 25 aus Zinn auf die zweite Schicht 27 galvanisch aufgebracht wird. Konkret erfolgt dieses Verzinnen für 11 Minuten bei Raumtemperatur und einer Stromdichte von 1 A/dm² in einem wässrigen Bad, welches eine Zinnionenkonzentration von 80 g/L aufweist (z.B. mittels STANNOSTAR™ HMM 2 LF, fluoboratfreier matter Zinnelektrolyt der Firma Enthone). Die somit erhaltene erste Schicht 25 aus Zinn weist eine Dicke von 5 µm auf.

Nach dem Verzinnen wird der Vorformling erneut gespült und für 3 Minuten bei 40°C getrocknet. Zur Fertigstellung des elektrischen Kontaktelementes 1 wird der Vorformling durch Stanzen von dem Kupferband getrennt und durch Umbiegen in seine endgültige Form gebracht.

Das auf diese Weise erhaltene Kontaktelement 1 kann nun durch Crimpen mit der elektrischen Leitung 15 verbunden werden.

Optional kann das Kontaktelement 1 zuvor noch einer Wärmebehandlung unterzogen werden, bei welcher das Kontaktelement 1 innerhalb von 2 Minuten auf 240°C erwärmt und für 1 Minute bei dieser Temperatur gehalten wird, bevor man es wieder auf Raumtemperatur abkühlen lässt. Durch die Wärmebehandlung werden die intermetallischen Phasenbereiche 31, 33 und 35 zwischen der ersten Schicht 25 aus Zinn und der zweiten Schicht 27 aus Bronze bzw. Messing, zwischen der zweiten Schicht 27 und der Feuerverzinnung (dritte Schicht 29) und zwischen der Feuerverzinnung 29 und dem Kupferblech 21 gezielt ausgebildet (Fig. 4).

### Zweite Ausführungsform (Fig. 5)

Ein Kupferband, das aus Kupferblech 21 ausgestanzte Vorformlinge mit einer Feuerverzinnung (dritte Schicht 29) aufweist, welche durch Umbiegen in die Form des elektrischen Kontaktelementes 1 gebracht werden können, wird vor dem Galvanisieren zunächst einer Vorbehandlung unterzogen. Dazu werden diejenigen Bereiche des Vorformlings, die den Anschlussabschnitt 5 bilden, nacheinander heißentfettet, gespült, elektrolytisch entfettet, gespült, von Oberflächenoxiden befreit und nochmals gespült. Anschließend wird durch Elektroplattieren eine Nickelschicht als zweite Schicht 27 auf den derart vorbehandelten Anschlussabschnitt 5 des feuerverzinnten Vorformlings galvanisch aufgebracht, wobei das Elektroplattieren für 7 Minuten bei 60°C und einer Stromdichte von 1 A/dm² in einem wässrigen Bad durchgeführt wird, welches eine Nickelionenkonzentation von 113 g/L aufweist (z.B. mittels LECTRO-NIC™ 10-03 HSX der Firma Enthone). Auf diese Weise wird eine zweite Schicht 27 aus Nickel erhalten, welche eine Dicke von 1 µm aufweist.

Anschließend werden die die zweite Schicht 27 aufweisenden Bereiche des Vorformlings gespült, von Oberflächenoxiden befreit und erneut gespült, bevor durch Elektroplattieren eine erste Schicht 25 aus Zinn auf die zweite Schicht 27 galvanisch aufgebracht wird. Konkret erfolgt dieses Verzinnen für 11 Minuten bei Raumtemperatur und einer Stromdichte von 1 A/dm² in einem wässrigen Bad, welches eine Zinnionenkonzentration von 80 g/L aufweist (z.B. mittels STANNOSTAR™ HMM 2 LF, fluoboratfreier matter Zinnelektrolyt der Firma Enthone). Die somit erhaltene erste Schicht 25 aus Zinn weist eine Dicke von 5 µm auf.

Nach dem Verzinnen werden die die erste Schicht 25 aufweisenden Bereiche des Vorformlings gespült, von Oberflächenoxiden befreit und erneut gespült, bevor durch Elektroplattieren eine vierte Schicht 37 aus Zink auf die erste Schicht 25 galvanisch aufgebracht wird. Konkret erfolgt dieses Verzinken für 3 Minuten bei Raumtemperatur und einer Stromdichte von 1,5 A/dm² in einem wässrigen Bad, welches eine Zinkionenkonzentration von 160 g/L aufweist (z.B. mittels ENTHOBRITE saurer Zinkelektrolyt der Firma Enthone). Die somit erhaltene vierte Schicht 37 aus Zink weist eine Dicke von 1 µm auf.

Nach dem Verzinken wird der Vorformling erneut gespült und für 3 Minuten bei 40°C getrocknet. Zur Fertigstellung des elektrischen Kontaktelementes 1 wird der Vorformling durch Stanzen von dem Kupferband getrennt und durch Umbiegen in seine endgültige Form gebracht.

Optional kann das Kontaktelement 1 vor dem Verbinden mit der elektrischen Leitung durch Crimpen noch einer Wärmebehandlung unterzogen werden, bei welcher das Kontaktelement 1 innerhalb von 2 Minuten auf 240°C erwärmt und für 1 Minute bei dieser Temperatur gehalten wird, bevor man es wieder auf Raumtemperatur abkühlen lässt. Durch die Wärmebehandlung werden die ursprüngliche erste Schicht 25 und die ursprüngliche vierte Schicht 37 zu der modifizierten ersten Schicht 39 vermischt sowie der intermetallische Phasenbereich 35 zwischen der Feuerverzinnung (dritte Schicht 29) und dem Kupferblech 21 gezielt ausgebildet (Fig. 6).

### Dritte Ausführungsform (Fig. 7)

Ein Kupferband, das aus Kupferblech 21 ausgestanzte Vorformlinge ohne Feuerverzinnung aufweist, welche durch Umbiegen in die Form des elektrischen Kontaktelementes 1 gebracht werden können, wird vor dem Galvanisieren zunächst einer Vorbehandlung unterzogen. Dazu werden diejenigen Bereiche des Vorformlings, die den Anschlussabschnitt 5 bilden, nacheinander heißentfettet, gespült, elektrolytisch entfettet, gespült, von Oberflächenoxiden befreit und nochmals gespült. Anschließend wird durch Elektroplattieren eine Bronzelegierung als zweite Schicht 27 unmittelbar auf das derart vorbehandelte Kupferblech 21 des Anschlussabschnitts 5 des Vorformlings galvanisch aufgebracht, wobei das Elektroplattieren für 4 Minuten bei 60°C und einer Stromdichte von 1 A/dm² in einem wässrigen Bad durchgeführt wird, welches eine Kupferionenkonzentation von 14 g/L, eine Zinnionenkonzentration von 20 g/L und eine Zinkionenkonzentration von 4 g/L aufweist (z.B. mittels BRONZEX^{®} WJ-SP der Firma Enthone). Auf diese Weise wird eine zweite Schicht 27 aus einer Bronzelegierung mit einer Zusammensetzung von 50 bis 55 Gew.-% Kupfer, 28 bis 32 Gew.-% Zinn und 15 bis 19 Gew.-% Zink erhalten, welche eine Dicke von 1 µm aufweist.

Anschließend werden die die zweite Schicht 27 aufweisenden Bereiche des Vorformlings gespült, von Oberflächenoxiden befreit und erneut gespült, bevor durch Elektroplattieren eine erste Schicht 25 aus Zinn auf die zweite Schicht 27 galvanisch aufgebracht wird. Konkret erfolgt dieses Verzinnen für 11 Minuten bei Raumtemperatur und einer Stromdichte von 1 A/dm² in einem wässrigen Bad, welches eine Zinnionenkonzentration von 80 g/L aufweist (z.B. mittels STANNOSTAR™ HMM 2 LF, fluoboratfreier matter Zinnelektrolyt der Firma Enthone). Die somit erhaltene erste Schicht 25 aus Zinn weist eine Dicke von 5 µm auf.

Nach dem Verzinnen werden die die erste Schicht 25 aufweisenden Bereiche des Vorformlings gespült, von Oberflächenoxiden befreit und erneut gespült, bevor durch Elektroplattieren eine vierte Schicht 37 aus Zink auf die erste Schicht 25 galvanisch aufgebracht wird. Konkret erfolgt dieses Verzinken für 3 Minuten bei Raumtemperatur und einer Stromdichte von 1,5 A/dm² in einem wässrigen Bad, welches eine Zinkionenkonzentration von 160 g/L aufweist (z.B. mittels ENTHOBRITE saurer Zinkelektrolyt der Firma Enthone). Die somit erhaltene vierte Schicht 37 aus Zink weist eine Dicke von 1 µm auf.

Nach dem Verzinken wird der Vorformling erneut gespült und für 3 Minuten bei 40°C getrocknet. Zur Fertigstellung des elektrischen Kontaktelementes 1 wird der Vorformling durch Stanzen von dem Kupferband getrennt und durch Umbiegen in seine endgültige Form gebracht.

Optional kann das Kontaktelement 1 vor dem Verbinden mit der elektrischen Leitung 15 durch Crimpen noch einer Wärmebehandlung unterzogen werden, bei welcher das Kontaktelement 1 innerhalb von 2 Minuten auf 240°C erwärmt und für 1 Minute bei dieser Temperatur gehalten wird, bevor man es wieder auf Raumtemperatur abkühlen lässt. Durch die Wärmebehandlung werden die ursprüngliche erste Schicht 25 und die ursprüngliche vierte Schicht 37 zu der modifizierten ersten Schicht 39 vermischt sowie die intermetallischen Phasenbereiche 31 und 41 zwischen der modifizierten ersten Schicht 39 und der zweiten Schicht 27 sowie zwischen der zweiten Schicht 27 und dem Kupferblech 21 gezielt ausgebildet (Fig. 8).

**Bezugszeichenliste**

| | |
|---|---|
| 1 | Kontaktelement |
| 3 | Kontaktabschnitt |
| 5 | Anschlussabschnitt |
| 7 | Crimpabschnitt |
| 9 | Crimpflügel |
| 11 | Halteabschnitt |
| 13 | Halteflügel |
| 15 | elektrische Leitung |
| 17 | Leitermaterial |
| 19 | Isolation |
| 21 | Kupferblech |
| 23 | Beschichtung |
| 25 | erste Schicht |
| 27 | zweite Schicht |
| 29 | dritte Schicht |
| 31 | intermetallischer Phasenbereich |
| 33 | intermetallischer Phasenbereich |
| 35 | intermetallischer Phasenbereich |
| 37 | vierte Schicht |
| 39 | modifizierte erste Schicht |
| 41 | intermetallischer Phasenbereich |

## Patentansprüche

1. Elektrisches Kontaktelement (1) mit einem Anschlussabschnitt (5), welcher aus einem Kupferblech (21) gebildet ist und eine Beschichtung (23) aufweist, wobei die Beschichtung (23) umfasst:
- eine erste Schicht (25, 39), welche Zinn enthält, und
- eine zweite Schicht (27), welche zwischen der ersten Schicht (25) und dem Kupferblech (21) angeordnet ist und wenigstens ein Metall oder wenigstens eine Metalllegierung enthält, wobei das Metall oder die Metalllegierung aus der Gruppe bestehend aus kupferhaltigen Legierungen, Nickel, nickelhaltigen Legierungen, Palladium, palladiumhaltigen Legierungen und beliebigen Kombinationen der vorstehend genannten Metalle und Metalllegierungen ausgewählt ist.

2. Kontaktelement (1) nach Anspruch 1,
**dadurch gekennzeichnet, dass** die zweite Schicht (27) eine Dicke von 0,5 bis 5 µm aufweist.

3. Kontaktelement (1) nach Anspruch 1 oder 2,
**dadurch gekennzeichnet, dass** die zweite Schicht (27) eine kupferhaltige Legierung enthält und bevorzugt daraus besteht.

4. Kontaktelement (1) nach Anspruch 3,
**dadurch gekennzeichnet, dass** die kupferhaltige Legierung bevorzugt 35 bis 75 Gew.-% Kupfer, 15 bis 45 Gew.-% Zinn und 5 bis 50 Gew.-% Zink enthält und die Summe aus Kupfer, Zinn und Zink wenigstens 90 Gew.-% beträgt

5. Kontaktelement (1) nach Anspruch 3,
**dadurch gekennzeichnet, dass** die kupferhaltige Legierung bevorzugt 40 bis 80 Gew.-% Kupfer und 20 bis 60 Gew.-% Zink enthält und die Summe aus Kupfer und Zink wenigstens 90 Gew.-% beträgt.

6. Kontaktelement (1) nach Anspruch 1 oder 2,
**dadurch gekennzeichnet, dass** die zweite Schicht (27) Nickel oder eine nickelhaltige Legierung enthält und bevorzugt daraus besteht, wobei die nickelhaltige Legierung bevorzugt wenigstens 80 Gew.-% Nickel enthält.

7. Kontaktelement (1) nach Anspruch 1 oder 2,
**dadurch gekennzeichnet, dass** die zweite Schicht (27) Palladium oder eine palladiumhaltige Legierung enthält und bevorzugt daraus besteht, wobei die palladiumhaltige Legierung bevorzugt wenigstens 80 Gew.-% Palladium enthält.

8. Kontaktelement (1) nach einem der vorherigen Ansprüche,
**dadurch gekennzeichnet, dass** die erste Schicht eine Dicke im Bereich von 1 bis 15 µm aufweist.

9. Kontaktelement (1) nach einem der vorherigen Ansprüche,
**dadurch gekennzeichnet, dass** die erste Schicht wenigstens 60 Gew.-% Zinn enthält.

10. Kontaktelement nach Anspruch 9,
**dadurch gekennzeichnet, dass** die erste Schicht (25, 39) 0 bis 40 Gew.-% Zink enthält.

11. Kontaktelement (1) nach einem der vorherigen Ansprüche,
**dadurch gekennzeichnet, dass** die Beschichtung eine dritte Schicht (29) umfasst, welche zwischen der zweiten Schicht (27) und dem Kupferblech (21) angeordnet ist und Zinn enthält.

12. Kontaktelement (1) nach einem der vorherigen Ansprüche,
**dadurch gekennzeichnet, dass** die Beschichtung eine vierte Schicht (37) umfasst, welche auf einer der zweiten Schicht (27) abgewandten Seite der ersten Schicht (25) angeordnet ist und Zink enthält.

13. Verfahren zur Herstellung eines elektrischen Kontaktelementes (19) mit einer Beschichtung (23), insbesondere nach zumindest einem der vorherigen Ansprüche, umfassend die Schritte:
- Bereitstellen eines Grundkörpers aus, optional feuerverzinntem, Kupferblech (21),
- Aufbringen einer zweiten Schicht auf den Grundkörper, wobei die zweite Schicht (27) wenigstens ein Metall oder wenigstens eine Metalllegierung enthält, wobei das Metall oder die Metalllegierung aus der Gruppe bestehend aus kupferhaltigen Legierungen, Nickel, nickelhaltigen Legierungen, Palladium, palladiumhaltigen Legierungen und beliebigen Kombinationen der vorstehend genannten Metalle und Metalllegierungen ausgewählt wird, und
- Aufbringen einer ersten Schicht (25), welche Zinn enthält, auf eine dem Grundkörper abgewandte Seite der zweiten Schicht.

14. Verfahren nach Anspruch 13,
**dadurch gekennzeichnet, dass** nach dem Aufbringen der Schichten (25, 27, 37) eine Wärmebehandlung durchgeführt wird.

15. Verfahren nach Anspruch 13 oder 14,
**dadurch gekennzeichnet, dass** die Schichten (25, 27, 37) jeweils mittels eines Verfahrens aufgebracht werden, das aus der Gruppe ausgewählt wird, die aus Galvanotechnik, Bedampfen, Sputtern, Tauchbeschichten, Sprühbeschichten und beliebigen Kombinationen der vorstehend genannten Verfahren besteht.
